# EUROPEAN PATENT SPECIFICATION

(11) **EP 3 683 368 B1**
(45) Date of publication and mention of the grant of the patent: **07.06.2023**
(21) Application number: 20151589.7
(22) Date of filing: 14.01.2020
(51) Int. Cl.: E03C 1/02

(54) **METHOD AND ASSEMBLY FOR MOUNTING A LEAD-THROUGH DEVICE IN A WALL**
VERFAHREN UND ANORDNUNG ZUR MONTAGE EINER DURCHFÜHRUNGSVORRICHTUNG IN EINER WAND
PROCÉDÉ ET ENSEMBLE DE MONTAGE D'UN DISPOSITIF DE TRAVERSÉE DANS UN MUR

(30) Priority: 16.01.2019 SE 1950052
(43) Date of publication of application: 22.07.2020
(73) Proprietor: Villeroy & Boch Gustavsberg AB, 134 29 Gustavsberg (SE)
(72) Inventor: CANI, Pär, 441 43 Alingsås (SE); OLSSON, Kristian, 447 94 Vårgårda (SE); RYDETORP, Björn, 447 95 Vårgårda (SE)
(74) Representative: Valea AB

(56) References cited:
- EP-A1- 2 525 000
- EP-A2- 2 014 838
- EP-A2- 2 269 754
- DE-U1-202009 007 862
- FR-A3- 3 047 751

## Description

### TECHNICAL FIELD

The present invention relates to a method for mounting a lead-through assembly in a wall. The present invention also relates to a lead-through assembly adapted to provide a fluid communication through a wall.

### BACKGROUND

Water pipes in buildings are commonly arranged inside walls of the building. So called lead-through devices are positioned inside the walls and used to bring the water pipes into the rooms where faucets or other water outlets are to be installed. There are two main categories of such lead-through devices, namely wall boxes and wall bend fixtures.

A wall bend fixture requires no water coupling inside the wall. Instead, the water pipe is bent by an angle of 90° and brought out through the wallboard inside which the wall bend fixture is installed. This is particularly suitable for mounting in e.g. a bathroom having a moisture barrier provided in its wall.

A wall box is a sealed box intended to be mounted inside the wall, with a water coupling provided inside the box. The water pipe is connected to the water coupling, and the wall coupling is in turn connected to e.g. a water blender in a bathroom or similar.

In both cases, the lead-through device requires an opening in the wall through which a portion of the lead-through device and/or the water pipes may protrude and provide connection to a faucet, blender or other type of water outlet. The lead-through device is subjected to forces at its connection to the water outlet and thus requires a stable installation in the wall. Typically, this is in part solved by placing for example a plywood sheet behind the wallboard, e.g. plasterboard. In this way a double wall construction is created, in which the plywood sheet provides the support needed for mounting the lead-through device.

However, there are circumstances when such a double wall construction is not desirable. Instead, a solution for fixedly mounting a lead-through device in a single wallboard, e.g. a single plasterboard, is desirable.

Furthermore, it is desirable to mount the lead-through device in the wall, in a manner that keeps the wallboard as intact as possible, keeping any members of the mounting arrangement protruding on the inside of the wallboard to a minimum, since this greatly facilitates providing the moisture barrier on the wallboard.

DE 20 2009 007862, EP 2 525 000, EP 2 014 838, EP 2269 754, and FR 3 047 751 disclose various arrangements for mounting lead-through devices in a wall. In particular DE 20 2009 007862 discloses the features of the preamble of claim 4.

### SUMMARY

It is a primary object of the present invention to overcome or at least alleviate at least one of the disadvantages of the prior art, or to provide a useful alternative. In particular, the object of the present invention is to provide an improved mounting of a lead-through device in a wall.

The object above may be achieved by the subject-matter of claim 1.

A first aspect of the present invention relates to a method for mounting a lead-through assembly in a wall as defined in claim 1.

In this method the securing of the at least one support section serves to keep the lead-through device in position while the retainer is attached. Thus, the lead-through device is temporarily, or preliminarily, secured to the first wall surface. The securing of the at least one support section is not intended to provide the fixing itself of the lead-through device, merely to position the lead-through device while the retainer is attached.

The method comprises securing the at least one support section, and thus the abutment surface, to the first wall surface by securing means extending in a direction from the second side of the wall and through the wall. In this way installation of the lead-through assembly is facilitated. The securing means may in this case be e.g. screws or nails. The steps of securing and fixing of the lead-through device is thus carried out from the second side of the wall.

Preferably, no guiding plate, washer or similar part, is needed on the second side of the wall in order to insert the securing means through the wall. Thus, the securing means may be inserted directly through the wall without any intermediate step of providing a guiding plate, washer or similar part, located on the second wall surface. This has the positive effect of reducing the interference with the moisture barrier. The less protruding elements that disrupt the evenness of a surface on which a moisture barrier is intended to be applied, the less complicated and more efficient the step of applying the moisture barrier will be. However, it is also possible to use a guiding element, the insertion of the securing means, such as a plate, a washer or similar element, in the method as described herein, if desirable.

The lead-through assembly comprises a mounting bracket. The mounting bracket is adapted to receive the lead-through device such that the passage portion extends through an opening in the mounting bracket. The mounting bracket comprises the at least one support section. The method further comprises:
- attaching the lead-through device to the mounting bracket.

The above listed steps of the method may be carried out in any order deemed appropriate. By way of example, the at least one support section may be secured to the first wall surface before or after attachment of the lead-through device to the mounting bracket.

The use of a mounting bracket when installing the lead-through device serves to simplify and facilitate the mounting. A mounting bracket also provides additional support for the clamping of the lead-through assembly in the wall. In this way, the mounting of the lead-through device may be substantially independent of the supporting capability of the wall construction itself.

The method involving a mounting bracket is thus advantageous when used on a wall construction comprising a single wallboard, e.g. plasterboard. In this case, the mounting bracket provides the desired stability by which the lead-through device may be clamped to the wall by the attached retainer. Also, the use of a mounting bracket may facilitate the positioning of the lead-through device.

When the retainer is attached to the passage portion of the lead-through device, the contact surface of the retainer abuts a surface on the second side of the wall structure, and thereby a clamping force arises between the abutment surface and the contact surface which clamps the lead-through device to the wall. In other words, the lead-through device is fixed in the wall solely by the clamping force between the at least one support section and the retainer.

The securing of the mounting bracket serves to keep the lead-through device in position while the retainer is attached. Thus, the mounting bracket is temporarily, or preliminary, secured to the first side of the wall. The securing of the mounting bracket is not intended to provide the fixing itself of the lead-through device, merely to position it while the retainer is attached.

A lead-through device as used herein may comprise a wall box or a wall bend fixture as outlined above.

The first side of the wall may correspond to an inlet side of the wall and the second side of the wall may correspond to an outlet side of the wall.

The wall in which the lead-through device is installed is commonly provided with a moisture barrier on the inside, and thus constitutes a wall of a wet space, such as a bathroom. The second side of the wall, as used herein, may thus represent the side of the wall facing the wet space. A faucet, blender or other type of water outlet is, in this case, typically connected to the lead-through device on the second side of the wall. Thus, the second side of the wall may correspond to an outlet side of the wall. The first side of the wall is opposite the second side. To this end, the water pipes leading up to the lead-through device may extend on the first side, which in this case corresponds to an inlet side of the wall.

The mounting bracket is secured to the wall by securing means.

The securing of the mounting bracket is intended to hold the lead-through device in position, such that the retainer may be attached to the passage portion of the lead-through device. Noticeably, the securing of the mounting bracket is not intended to fix the lead-through device in the wall. The abutment surface may be used to secure the mounting bracket. By way of example, the abutment surface may serve as an attachment zone for one or more screws

The method comprises securing the mounting bracket to the first wall surface by securing means extending in a direction from the second side of the wall and through the wall. This has the positive effect of securing the mounting bracket in an easy and accessible manner. By way of example, the abutment surface may serve as attachment zone for one or more screws or nails being attached from the second side of the wall to secure the mounting bracket on the first side of the wall. In this way, when the second side of the wall corresponds to an outlet side of the wall, the mounting bracket may be secured in an easy and accessible manner.

The at least one support section of the mounting bracket, in addition to providing support for clamping the lead-through device to the wall, may also provide an attachment zone for securing means used to secure the mounting bracket.

By way of example, the mounting bracket may be secured by one or more screws, screwed from the second side, through the wall and into the abutment surface. The advantageous configuration of utilizing substantially the complete available support surface as attachment zone for a securing means, such as one or more screws, implies that the securing means may be positioned arbitrarily within the area of the abutment surface. This provides a simple and efficient way of securing the mounting bracket with a minimum of fitting of the securing means to a specific position. A further positive effect is that any protruding elements of the securing means on the second side of the wall, may involve just one or more screw heads. This may greatly simplify providing the moisture barrier on the inside of the wall, which is advantageously carried out after securing the mounting bracket, but prior to e.g. tiling or providing any other type of top sheet on the wall.

The method may comprise adjusting the length of the passage portion that extends through the opening in the wall. By way of example, the adjustment may be made by means of cutting so as to achieve a desired length of the passage portion protruding through the opening in the wall. The desired length is selected such that, when the retainer is attached to the passage portion, the contact surface of the retainer will press against a surface on the second side of the wall.

The method as described herein may be carried out by using a lead-through assembly adapted to provide a fluid communication through a wall in a direction of extension from a first side of the wall to a second side of the wall, such as a lead-through assembly according to a second aspect of the present invention described below.

A second aspect of the present invention relates to a lead-through assembly adapted to provide a fluid communication through a wall in a direction of extension from a first side of the wall to a second side of the wall. The lead-through assembly comprises:
- a lead-through device comprising a passage portion configured to extend through an opening in the wall to the second side of the wall and being adapted to provide the fluid communication,
- at least one support section comprising an abutment surface configured to abut a first wall surface of the wall, the first wall surface being located on the first side of the wall, when the passage portion is arranged in the opening in the wall, the abutment surface further being configured to be secured to the surface of the wall on the first side,
- a retainer being adapted to be attached to the passage portion of the lead-through device from the second side of the wall, the retainer comprising a contact surface adapted to abut a second wall surface on the second side of the wall when the retainer is attached to the passage portion, thereby fixing the lead-through assembly in the wall by creating a clamping force between the abutment surface and the contact surface.

An assembly as recited above has the advantage of fixing the lead-through device in the wall by means of clamping. It may reduce the need for drilling and possibly destroy a moisture barrier of a wall in which the lead-through assembly is installed. It further provides a facilitated installation, such as the fixing of the lead-through device in the wall may be carried out on the second side of the wall, which typically may be the wet space side.

The at least one support section is adapted to be secured to the first wall surface by securing means extending in a direction from the second side of the wall and through the wall. In this way installation of the lead-through assembly is facilitated. The securing means may be e.g. screws or nails. The steps of securing and fixing of the at least one support section is thus carried out from the second side of the wall.

The lead-through assembly comprises a mounting bracket. The mounting bracket is adapted to receive the lead-through device such that the passage portion extends through an opening in the mounting bracket. The mounting bracket also comprises the at least one support section.

In this way, support is provided by the mounting bracket, being located on the first side of the wall, for the retainer to press against from the second side of the wall. Thus, the lead-through assembly is advantageous when the wall in which the lead-through device is installed is a single wallboard of some kind, not being able to support an installation and fixing of the lead-through device on its own.

An assembly as recited above thus facilitates installation and positioning of a lead-through device. The mounting bracket may further provide additional support when the lead-through device is installed, and may prevent e.g. rotational movement of the lead-through device.

The mounting bracket may be attached to the first wall surface using e.g. screws or nails.

The mounting bracket may comprise a receiving section adapted to receive the lead-through device, and a plurality of the at least one support section, located around the periphery of the receiving section, each one of the plurality of the at least one support section comprising an abutment surface portion. This implies an advantageous configuration of abutment surface portions extending in different directions from the receiving section. The receiving section comprises an opening through which the passage portion is inserted, and which further guides the attachment of the lead-through device.

The first side of the wall may correspond to an inlet side of the wall, and the second side of the wall corresponds to an outlet side of the wall.

A mounting bracket may comprise one, two or more receiving sections. In this way, a corresponding number of lead-through devices may be mounted using the same mounting bracket. An intermediate abutment portion surface may be located between two adjacent receiving sections.

At least one of the plurality of support sections may be selectively removable. This has the positive effect that the location, or extension, of the abutment surface is adjustable depending on available space for the mounting. Thus, the size and extent of the overall abutment surface may be selectable by selectively removing portions of it.

By way of example, an abutment surface portion may be removed by breaking it off along a pre-determined zone. By way of example, the pre-determined zone may comprise an indication of fracture, making it prone to break off when subjected to a force.

The plurality of support sections provide the attachment zone for securing means used to secure the mounting bracket to the first wall surface. This has the positive effect of providing a substantial available surface, which may be used to secure the mounting bracket. This has the positive effect of simplifying the securement of the mounting bracket since the securing means may be positioned arbitrarily within the area of the abutment surface. In other words, the complete, or substantially complete, abutment surface is available to secure it to the first wall surface.

Securing the mounting bracket is intended to position the mounting bracket while the retainer is attached. Thus, the mounting bracket is temporarily, or preliminary, secured to the first side of the wall, merely to keep it in position while the retainer is attached. The securing means are adapted accordingly, both in number and to the extent they carry load. Thus, the securing means are not adapted to provide the permanent fixing itself of the lead-through assembly.

The mounting bracket and the lead-through device may be adapted to be attached by means of a snap-lock connection. This provides an easy and efficient way of attaching the lead-through device to the mounting bracket. Snap-lock connection means may be provided in the receiving section of the mounting bracket. The lead-through device may be provided with matching snap-lock means.

The lead-through device may be adapted to be attached to the mounting bracket and/or to the receiving section in an alternative way. Purely by way of example, it may be adapted to be attached to the mounting bracket by a press-fit connection, or by a threaded connection.

The retainer may be attached to the passage portion by means of a threaded connection.

The retainer may comprise a male threaded section, and the passage portion may comprise a female threaded section adapted to receive the male threaded section of the retainer. This is an advantageous configuration since it provides a slim and efficient attachment.

The retainer may thus comprise an attachment portion adapted to be attached to the passage portion of the lead-through device, and a contact portion which comprises the contact surface adapted to abut a surface on the second side of the wall when the retainer is attached.

### BRIEF DESCRIPTION OF THE DRAWINGS

The present invention will hereinafter be further explained by means of non-limiting examples with reference to the appended drawings wherein:
- Fig. 1: illustrates a cross-section of a lead-through assembly according to an embodiment of the invention;
- Fig. 2: illustrates the lead-through assembly of Fig. 1 with a pipe assembly arranged through the assembly;
- Fig. 3: is a detailed view showing the mounting bracket of Figs. 1 and 2;
- Fig. 4: is a detailed view showing the lead-through device of Figs. 1 and 2;
- Figs. 5a and 5b: illustrate the mounting bracket with the lead-through device attached;
- Fig. 6: illustrates a cross section of the mounting bracket, with the lead-through device attached, secured to the wall;
- Fig. 7: is an exploded view of the assembly of Fig. 1;
- Fig. 8a: illustrates a method according to an embodiment of the present invention, and
- Fig. 8b: illustrates a method according to another embodiment of the present invention.

It should be noted that the appended drawings are schematic and that individual components are not necessarily drawn to scale and that the dimensions of some features of the present invention may have been exaggerated for the sake of clarity.

### DETAILED DESCRIPTION

The invention will, in the following, be exemplified by embodiments. It should however be realized that the embodiments are included in order to explain principles of the invention and not to limit the scope of the invention, as defined by the appended claims. A feature from one embodiment may be combined with one or more features of any other embodiment.

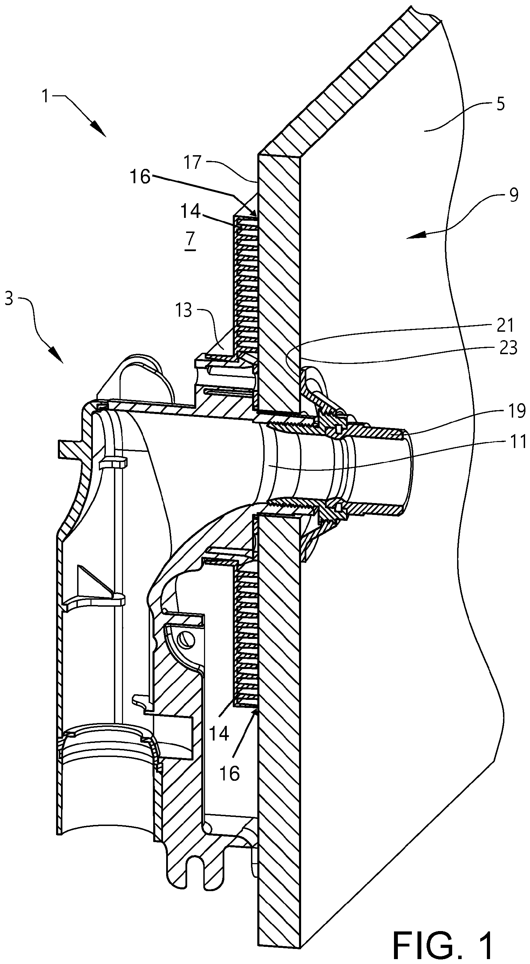

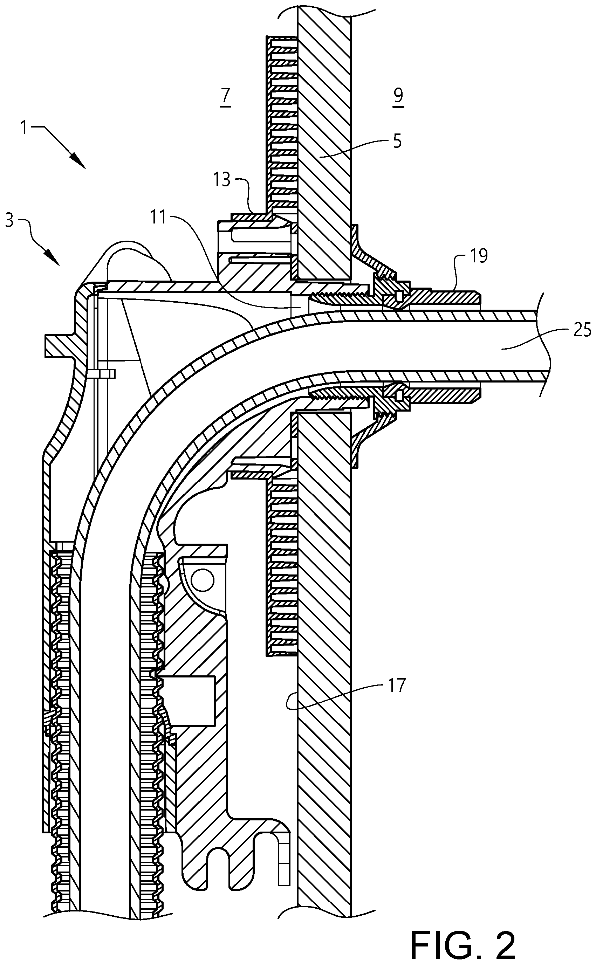

Figs. 1 and 2 illustrate a lead-through assembly 1 according to an embodiment of the present invention. The lead-through assembly 1 is adapted to provide a fluid communication through the wall 5 in a direction of extension from a first side 7 of the wall 5 to a second side 9 of the wall. Here, the first side 7 corresponds to an inlet side and the second side 9 corresponds to an outlet side. The lead-through assembly 1 comprises a lead-through device 3. The lead-through device 3 comprises a passage portion 11 which extends through an opening in the wall 5 to the second side 9 of the wall 5 and is adapted to provide the fluid communication.

The lead-through assembly 1 comprises a mounting bracket 13 to which the lead-through device 3 is attached such that the passage portion 11 extends through an opening of the mounting bracket 13. The mounting bracket 13 comprises support sections 14. The support sections 14 comprise an abutment surface 16. The abutment surface 16 abuts a surface 17 of the first side 7 of the wall 5, referred to as the first wall surface 17.

The lead-through assembly 1 further comprises a retainer 19 attached to the passage portion 11 of the lead-through device 3 from the second side 9 of the wall 5. The retainer 19 comprises a contact surface 21 which abuts a surface 23 on the second side 9 of the wall 5, referred to as the second wall surface 23, when the retainer is attached to the passage portion 11. In this way, the lead-through assembly 1 is fixed in the wall by means of clamping. Thus, the wall 5 is clamped between the abutment surface 16 of the support section 14 and the contact surface 21 of the retainer 19. Support is provided by the mounting bracket 13, being located on the first side 7 of the wall 5, for the retainer 19 to press against from the second side 9 of the wall 5. Thus, the lead-through assembly 1 is particularly useful when the wall 5 in which the lead-through device 3 is installed is for example a single wallboard of some kind, not being able to support an installation on its own.

The lead-through device 3 in Fig. 1 is of a wall bend fixture type, and in Fig. 2 the lead-through device 3 is illustrated with a pipe assembly 25 arranged through the same. However, the lead-through device may alternatively be of a wall box type in which case a pipe assembly is connected to the wall box on the first side of the wall.

The abutment surface 16, and thus the mounting bracket 13 in the embodiment of the lead-through assembly 1 illustrated in Figs. 1 and 2, is secured to the first wall surface 17. The abutment surface 16 is secured by securing means extending in a direction from the second side 9 of the wall 5 and through the wall 5. Securing means may e.g. be screws or nails. The securing means are not illustrated in the Figs.

Thus the lead-through assembly 1 may be mounted in the wall 5 from the second side 9 of the wall 5. The second side 9 of the wall 5 typically faces a wet space, and thus installation may be facilitated by providing easy access and available space for mounting activity.

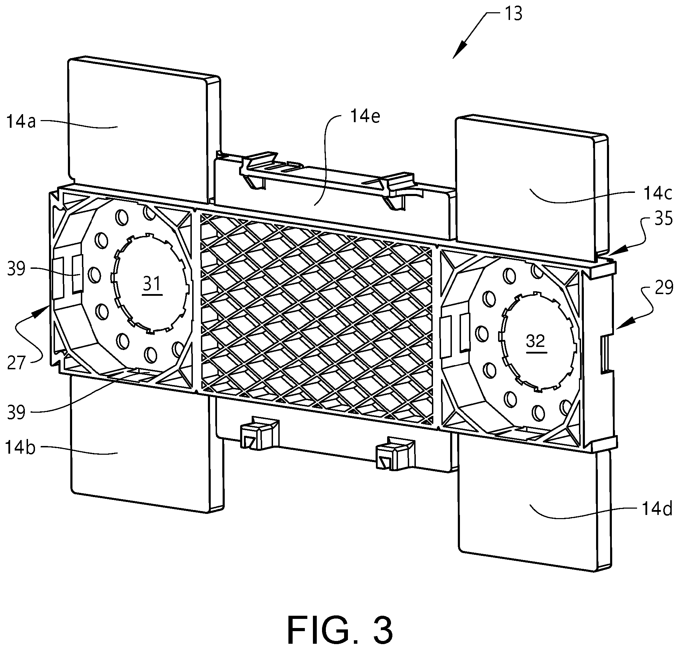

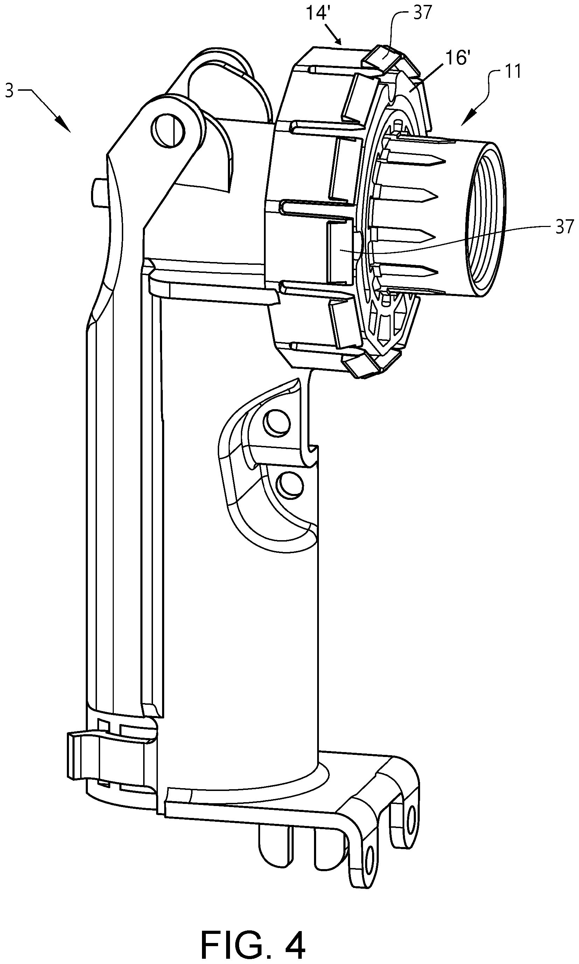

The lead-through assembly 1 in Figs. 1 and 2 will be further detailed below with reference to Figs. 3 and 4. Fig. 3 shows the mounting bracket 13. The mounting bracket 13 comprises two receiving sections 27, 29 for receiving a lead-through device respectively. The receiving sections 27, 29 each comprise an opening 31, 32 for a passage portion of each lead-through device to extend through. Noticeably, a mounting bracket and thus lead- through assembly may be adapted for any number of lead-through devices, for example one or four lead-through devices. Hence, the size of the mounting bracket would be adjusted accordingly.

The mounting bracket 13 further comprises five support sections 14a,..,14e, which, as illustrated, are located around a periphery of the receiving section 27, 29. The support sections 14a,.., 14e comprise the abutment surface, each support section 14a, .., 14e comprises a portion of the abutment surface 16.

In an embodiment of the lead-through assembly at least one of the support sections of the mounting bracket is selectively removable. In this way the location, or extension, of the abutment surface is adjustable depending on available space for installation/mounting. With reference to Fig. 3, an indication of fracture 35 extending along the interface between a receiving section 29 and support section 14c may serve as a break off zone for selectively removing the support section 14c. Any other support section may be selectively removable in a similar manner.

Fig. 4 illustrates the lead-through device 3 of the arrangement in Figs. 1 and 2. The lead-through device 3 comprises the passage portion 11 which is to be arranged through the opening of the receiving section of the mounting bracket and further through an opening in the wall. The lead-through device 3 comprises snap-lock means 37 spaced apart along a periphery which matches corresponding snap-lock means 39 of the receiving section of the mounting bracket 3, see Fig. 3. Thus, the lead-through device 3 is attached to the mounting bracket 13 with a snap-lock connection.

A lead-through device 3 according to the shown embodiments in the Figs. may be mounted in the wall, with or without a mounting bracket 13. In an embodiment without the mounting bracket 13, outside of the scope of the claims, the lead-through device 3 comprises the at least one support section 14' and abutment surface 16', see Fig. 4. The abutment surface 16', in the shown embodiment forms an annular-shaped surface extending radially from the periphery of the passage portion 11 in Fig.4. The at least one support section 14' and abutment surface 16' may however be adapted in size and/or shape and thus being adapted depending on e.g. available space for the installation and the wall material into which the lead-through assembly will be installed.

Thus, it is possible that a lead-through device 3 as described herein may comprise an abutments surface 16' adapted to directly abut a first wall surface 17 and/or adapted to abut a surface of a mounting bracket 13, when being attached to one, as described herein, further detailed below.

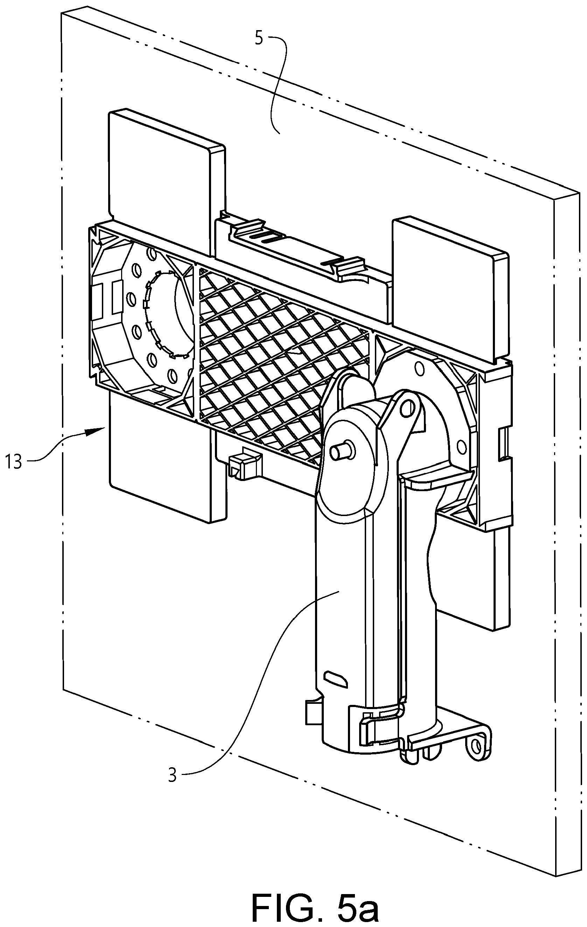

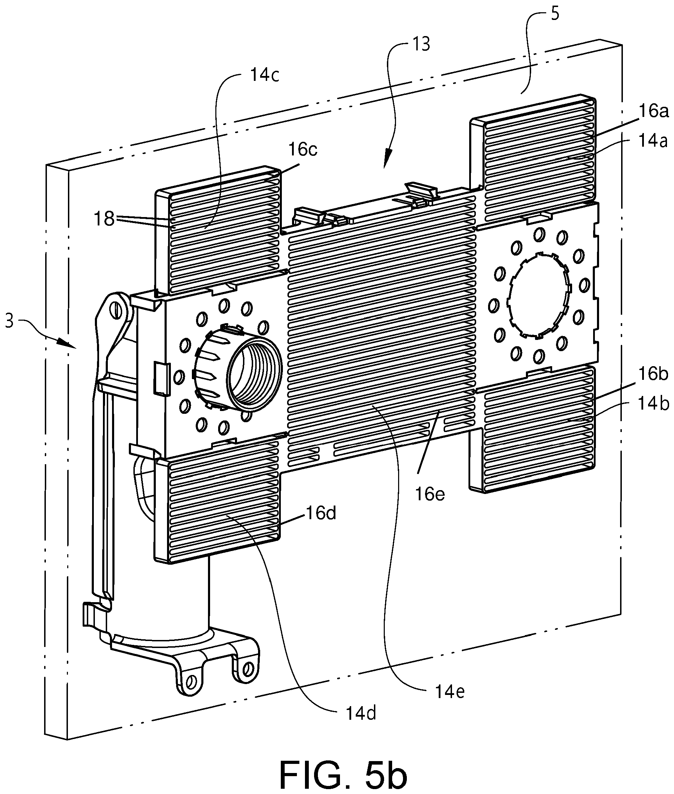

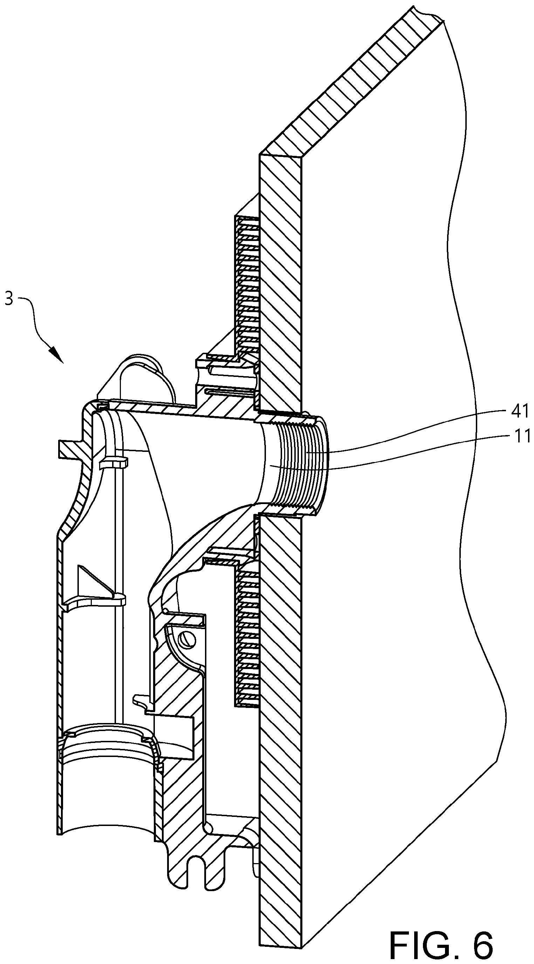

With reference to Figs. 5a, 5b and 6, the mounting bracket 13 with the lead-through device 3 attached is illustrated. The mounting bracket 13 and lead-through device 3 is shown as secured to the wall 5. The wall 5 is illustrated as see-through making the abutment surface portions of the support section 14a, ..,14e visible in Fig. 5b. As illustrated the abutment surface portions 16a,.., 16e of the support sections 14a, ..,14e abut a first wall surface 17 when the passage portion 11 extends through the opening to the second side 9 of the wall 5.

The mounting bracket 13 is secured to the wall 5 such that the passage portion 11 is held in position while the retainer is attached. The mounting bracket 13 may be secured by securing means, e.g. screws or nails, extending in a direction from the second side 9 of the wall 5 and through the wall 5. In this case, the support sections 14a, ..,14e provide attachment zones for the securing means. Each support section 14a,.., 14e is in the shown embodiment designed so as to provide a linear screen pattern, or a raster, extending over the main area of the support sections, see Fig. 5b for example. The cross-section of the support sections in Figs. 1 and 2 also show the design of the abutment surface 16. Thus, the abutment surface 16 may be seen as being interrupted by a plurality of grooves 18. The grooves extend along an extension of the abutment surface 16 and parallel to each other, thus spaced apart in a regular pattern. The pattern of grooves provides attachment for a securing means as well as reduces the weight of the mounting bracket. In this way an attachment zone is provided that extends over the complete, or substantially the complete extension of the support section 14a,.., 14e in a plane parallel to the first wall surface 17. The abutment surface may also be designed in alternative ways. Purely by way of example, the abutment surface may be coherent, without being interrupted. A securing means, such as a screw or nail, may be inserted at any position within the perimeter of each support section 14a,.., 14e. Thereby, the abutment surface 16 will be secured abutting the first wall surface 17.

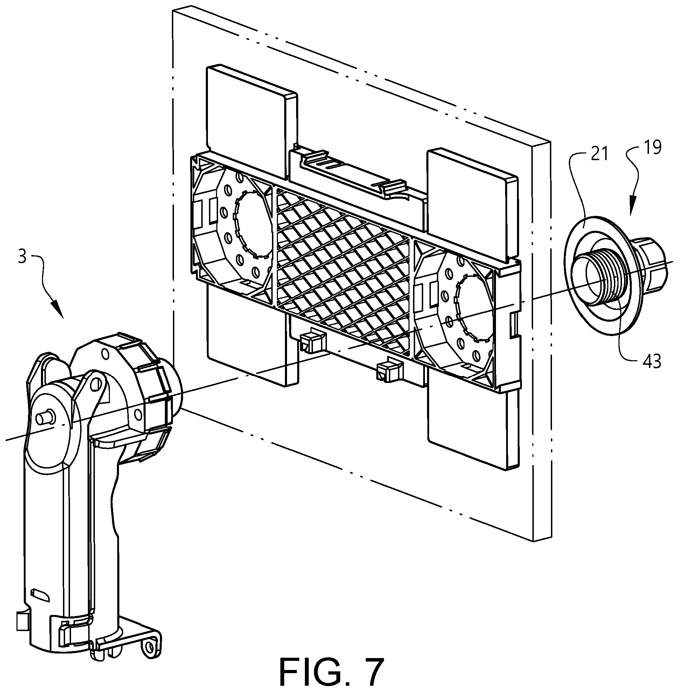

The passage portion 11 of the lead-through device 3 comprises a female, i.e. internal, threaded section 41, which is adapted to receive a male, i.e. external, threaded section 43 of the retainer 19, see Figs. 6 and 7. The retainer 19 is attached by a threaded connection to the passage portion 11 of the lead-through device 3, and thereby clamps the lead-through device 3 to the wall 5. For illustration of the complete arrangement 1, reference is made to Figs. 1 and 2. Fig. 7 illustrates the parts of the arrangement prior to being mounted.

Thus, the retainer 19 may be attached to the lead through device 3 using attachment means in the form of a threaded connection. As an alternative, the threaded connection may be reversed such that the passage portion 11 comprises the male threaded section and the retainer comprises the female threaded connection. It is further envisaged that other connections means are used to attach the retainer to the lead-through device.

Noticeably, the passage portion 11 is illustrated as extending past the wall 5 to the second side 9. However, the length of the passage portion 11 and thus, to which extent it protrudes through the opening is selectable. Since the retainer 19 comprises the male threaded section 43, its longitudinal extension may easily be adapted correspondingly to reach the passage portion 11. This is advantageous since the attachment position for the retainer to the passage portion, may be selectable along a direction of the longitudinal extension of the opening 31, 32 in the wall 5, without having to modify or change the opening 31, 32 in the wall, since the opening 31, 32 is adapted to receive the passage portion 11.

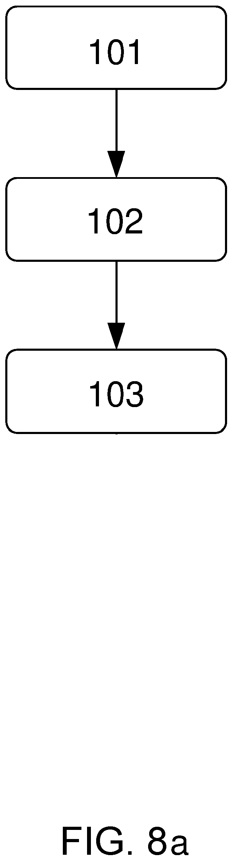

Fig. 8a discloses a method for mounting a lead-through assembly 1 in a wall 5 as described herein. The lead-through assembly 1 is adapted to provide a fluid communication through the wall 5 in a direction of extension from a first side 7 of the wall 5 to a second side 9 of the wall 5. The lead-through assembly 1 comprises:
- a lead-through device 3 comprising a passage portion 11 configured to extend through an opening in the wall 5 to the second side 9 of the wall and being adapted to provide the fluid communication,
- at least one support section 14, 14' comprising an abutment surface 16, 16' configured to abut a first wall surface 17 of the wall 5, the first wall surface 17 being located on the first side 7,
- a retainer 19 being adapted to be attached to the passage portion 11 of the lead-through device 3 from the second side of the wall 5, the retainer 19 comprising a contact surface 21 adapted to press against a second wall surface 23 located on the second side 9 of the wall 5 when the retainer 19 is attached to the passage portion 11.

The method comprises:
- arranging 101 the passage portion 11 of the lead-through device 3 through the opening in the wall 5, such that the abutment surface 16, 16' abuts the first wall surface 17,
- securing 102 the at least one support section 14, 14' to the first wall surface 17,
- fixing 103 the lead-through assembly 1 in the wall 5 by attaching the retainer 19 to the passage portion 11 on the second side 9 of the wall 5, such that the contact surface 21 presses against the second wall surface 23, thereby creating a clamping force between the abutment surface 16, 16' of the at least one support section 14, 14' and the contact surface 21 of the retainer 19.

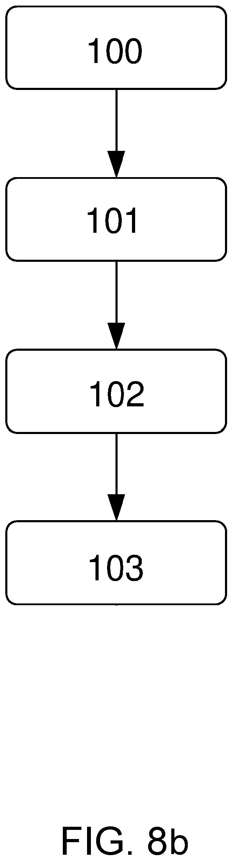

As previously described, the lead-through assembly 1 comprises a mounting bracket 13, see for example Figs. 1 and 2. The mounting bracket 13 is adapted to receive the lead-through device 3 such that the passage portion 11 extends through an opening in the mounting bracket 13 and the mounting bracket 13 also comprises the at least one support section 14 in this case. Thus, a method as recited above comprises:
- attaching 100 the lead-through device 3 to the mounting bracket 13, see Fig. 8b.

The above listed steps of the method may be carried out in any order deemed appropriate. By way of example, when a mounting bracket 13 is provided, the at least one support section 14 may be secured to the first wall surface 17 before or after attachment of the lead-through device 3 to the mounting bracket 13 and arranging of the passage portion 11 through the opening in the wall 5.

A method as recited above comprising the use of a mounting bracket, implies a mounting of a lead-through device in which additional support is provided by the at least one support section of the mounting bracket and fixing of the lead-through device in the wall is achieved by clamping the lead-through device to the wall by means of the retainer. In this way, the mounting of the lead-through device is substantially independent of the supporting capability of the wall construction itself.

The method comprising the use of a mounting bracket is advantageous for a wall construction comprising a single wallboard, e.g. plasterboard. In this case, the mounting bracket provides the desired stability so that the lead-through device can be clamped to the wall by the retainer.

The method comprises securing the at least one support section 14, 14' to the first wall surface 17 by securing means extending in a direction from the second side 9 of the wall 5 and through the wall 5.

Preferably, no guiding plate, washer or similar part, is needed on the second side of the wall in order to insert the securing means through the wall during mounting, as may be gleaned from the Figs. Thus, the securing means are installed directly through wall without any intermediate step of providing a guiding element, such as a plate, a washer or similar part, situated on the second wall surface. This has the positive effect of reducing the interference with a possible moisture barrier. The less protruding elements that disrupt the evenness of a surface on which a moisture barrier is intended to be applied, the less complicated and more efficiently the step of applying the moisture barrier.

However, it is possible to use a guiding element for the insertion of the securing means, such as a plate, washer or similar, in a method or assembly as described herein, if deemed desirable.

The method may also comprise adjusting the length of the passage portion that extends past the opening in the wall. Adjusting the length may be carried out after securing the mounting bracket to the first side of the wall.

Further modifications of the invention within the scope of the appended claims are feasible. As such, the present invention should not be considered as limited by the embodiments and figures described herein. Rather, the full scope of the invention should be determined by the appended claims, with reference to the description and drawings.

## Claims

1. A method for mounting a lead-through assembly (1) in a wall (5), the lead-through assembly (1) being adapted to provide a fluid communication through the wall (5) in a direction of extension from a first side (7) of the wall (5) to a second side (9) of the wall (5), the lead-through assembly (1) comprising:
- a lead-through device (3) comprising a passage portion (11) configured to extend through an opening in the wall (5) to the second side (9) of the wall (5) and being adapted to provide the fluid communication,
- a mounting bracket (13), the mounting bracket (13) being adapted to receive the lead-through device (3) such that the passage portion (11) extends through an opening in the mounting bracket (13), the mounting bracket (13) comprising at least one support section (14, 14') comprising an abutment surface (16, 16') configured to abut a first wall surface (17) of the wall (5), the first wall surface (17) being located on the first side (7) of the wall (5),
- a retainer (19) being adapted to be attached to the passage portion (11) of the lead-through device (3) from the second side (9) of the wall (5), the retainer (19) comprising a contact surface (21) adapted to press against a second wall surface (23) located on the second side (9) of the wall (5) when the retainer (19) is attached to the passage portion (11),
the method comprising:
- arranging (101) the passage portion (11) of the lead-through device (3) through the opening in the wall (5), such that the abutment surface (16, 16') abuts the first wall surface (17),
- attaching (100) the lead-through device (3) to the mounting bracket (13);
- securing (102) the at least one support section (14, 14') to the first wall surface (17) by securing means extending in a direction from the second side (9) of the wall (5) and through the wall (5) into the abutment surface, wherein substantially the complete available abutment surface can be utilized as an attachment zone for the securing means, the securing means being positioned arbitrarily within the area of the abutment surface,
- fixing (103) the lead-through assembly (1) in the wall (5) by attaching the retainer (19) to the passage portion (11) on the second side (9) of the wall (5), such that the contact surface (21) presses against the second wall surface (23) of the second side (9) of the wall (5), thereby creating a clamping force between the abutment surface (16, 16') of the at least one support section (14, 14') and the contact surface (21) of the retainer (19).

2. The method according to claim 1, wherein the first side (7) of the wall (5) corresponds to an inlet side of the wall (5) at which water pipes leading up to the lead-through device (3) extend, and the second side (9) of the wall corresponds to an outlet side of the wall (5), at which a faucet, blender or other type of water outlet is to be connected to the lead-through device.

3. The method according to any one of the preceding claims, wherein the method comprises adjusting the length of the passage portion (11) that extends through the opening in the wall (5).

4. A lead-through assembly (1) adapted to provide a fluid communication through a wall (5) in a direction of extension from a first side (7) of the wall (5) to a second side (9) of the wall (5),
the lead-through assembly (1) comprising:
- a lead-through device (3) comprising a passage portion (11) configured to extend through an opening in the wall (5) to the second side (9) of the wall (5) and being adapted to provide the fluid communication,
- a mounting bracket (13) adapted to receive the lead-through device (3) such that the passage portion (11) extends through an opening in the mounting bracket (13), the mounting bracket (13) comprising at least one support section (14, 14') comprising an abutment surface (16, 16') configured to abut a first wall surface (17) of the wall (5), the first wall surface (17) being located on the first side (7) of the wall (5), when the passage portion (11) is arranged in the opening in the wall (5),
wherein the at least one support section (14, 14') is adapted to be secured to the first wall surface (17) by securing means,
- a retainer (19) being adapted to be attached to the passage portion (11) of the lead-through device (3) from the second side (9) of the wall (5), the retainer (19) comprising a contact surface (21) adapted to abut a second wall surface (23) located on the second side (9) of the wall (5) when the retainer (19) is attached to the passage portion (11), thereby fixing the lead-through assembly (1) in the wall (5) by creating a clamping force between the abutment surface (16, 16') and the contact surface (23),
**characterized in that**
the securing means extend in a direction from the second side (9) of the wall (5) and through the wall (5) into the abutment surface (16), and **in that** substantially the complete available abutment surface (16) is configured as an attachment zone for the securing means, such that the securing means can be positioned arbitrarily within the area of the abutment surface (16).

5. The lead-through assembly (1) according to claim 4, wherein the mounting bracket (13) comprises a receiving section (27, 29) adapted to receive the lead-through device (3), and a plurality of support sections (14a,.., 14e), located around the periphery of the receiving section (27, 29), each one of the plurality of support sections (14a,.., 14e) comprising an abutment surface portion (16a,.., 16e).

6. The lead-through assembly (1) according to claim 5, wherein at least one of the plurality of support sections (14a,.., 14e) is selectively removable.

7. The lead-through assembly (1) according to any one of claims 4 to 6, wherein the plurality of support sections (14a,.., 14e) provide the attachment zone for securing means for securing of the abutment surface (16) to the first wall surface (17).

8. The lead-through assembly (1) according to any one of claims 4 to 7, wherein the mounting bracket (13) and the lead-through device (3) are adapted to be attached by means of a snap-lock connection.

9. The lead-through assembly (1) according to any one of claims 4 to 8, wherein the retainer (19) is adapted to be attached to the passage portion (11) by means of a threaded connection.

10. The lead-through assembly (1) according to claim 9, wherein the retainer (19) comprises a male threaded section (43), and the passage portion (11) comprises a female threaded section (41) adapted to receive the male threaded section (43) of the retainer (19).

## Patentansprüche

1. Verfahren zum Montieren einer Durchführungsanordnung (1) in einer Wand (5), wobei die Durchführungsanordnung (1) angepasst wird, um eine Fluidkommunikation durch die Wand (5) in einer Erstreckungsrichtung von einer ersten Seite (7) der Wand (5) zu einer zweiten Seite (9) der Wand (5) bereitzustellen, die Durchführungsanordnung (1) umfassend:
- eine Durchführungsvorrichtung (3), umfassend einen Durchgangsabschnitt (11), der konfiguriert ist, um sich durch eine Öffnung in der Wand (5) zu der zweiten Seite (9) der Wand (5) zu erstrecken, und angepasst wird, um die Fluidkommunikation bereitzustellen,
- einen Montagebügel (13), wobei der Montagebügel (13) angepasst wird, um die Durchführungsvorrichtung (3) derart aufzunehmen, dass sich der Durchgangsabschnitt (11) durch eine Öffnung in dem Montagebügel (13) erstreckt, wobei der Montagebügel (13), umfassend mindestens einen Stützbereich (14, 14'), umfassend eine Anstoßoberfläche (16, 16'), konfiguriert ist, um an einer ersten Wandoberfläche (17) der Wand (5) anzustoßen, wobei sich die erste Wandoberfläche (17) auf der ersten Seite (7) der Wand (5) befindet,
- einen Halter (19), der angepasst wird, um an dem Durchgangsabschnitt (11) der Durchführungsvorrichtung (3) von der zweiten Seite (9) der Wand (5) angebracht zu werden, wobei der Halter (19), umfassend eine Berührungsoberfläche (21), angepasst ist, um gegen eine zweite Wandoberfläche (23) zu drücken, die sich auf der zweiten Seite (9) der Wand (5) befindet, wenn der Halter (19) an dem Durchgangsabschnitt (11) angebracht wird,
das Verfahren umfassend:
- Anordnen (101) des Durchgangsabschnitts (11) der Durchführungsvorrichtung (3) durch die Öffnung in der Wand (5), derart, dass die Anstoßoberfläche (16, 16') an der ersten Wandoberfläche (17) anstößt,
- Anbringen (100) der Durchführungsvorrichtung (3) an dem Montagebügel (13);
- Befestigen (102) des mindestens einen Stützbereichs (14, 14') an der ersten Wandoberfläche (17) mittels Sicherungsmittel, die sich in einer Richtung von der zweiten Seite (9) der Wand (5) und durch die Wand (5) in die Anstoßoberfläche hinein erstrecken, wobei im Wesentlichen die gesamte verfügbare Anstoßoberfläche als eine Anbringungszone für die Sicherungsmittel genutzt werden kann, wobei die Sicherungsmittel willkürlich innerhalb der Fläche der Anstoßoberfläche positioniert werden,
- Fixieren (103) der Durchführungsanordnung (1) in der Wand (5) mittels Anbringens des Halters (19) an dem Durchgangsabschnitt (11) auf der zweiten Seite (9) der Wand (5), derart, dass die Berührungsoberfläche (21) gegen die zweite Wandoberfläche (23) der zweiten Seite (9) der Wand (5) drückt, wobei dadurch eine Klemmkraft zwischen der Anstoßoberfläche (16, 16') des mindestens einen Stützbereichs (14, 14') und der Berührungsoberfläche (21) des Halters (19) erzeugt wird.

2. Verfahren nach Anspruch 1, wobei die erste Seite (7) der Wand (5) einer Einlassseite der Wand (5) entspricht, an der sich Wasserleitungen, die zu der Durchführungsvorrichtung (3) führen, erstrecken und die zweite Seite (9) der Wand einer Auslassseite der Wand (5) entspricht, an der ein Hahn, ein Mischer oder eine andere Art von Wasserauslass mit der Durchführungsvorrichtung verbunden werden soll.

3. Verfahren nach einem der vorhergehenden Ansprüche, wobei das Verfahren ein Einstellen der Länge des Durchgangsabschnitts (11) umfasst, der sich durch die Öffnung in der Wand (5) erstreckt.

4. Durchführungsanordnung (1), die angepasst ist, um eine Fluidkommunikation durch eine Wand (5) in einer Erstreckungsrichtung von einer ersten Seite (7) der Wand (5) zu einer zweiten Seite (9) der Wand (5) bereitzustellen,
die Durchführungsanordnung (1) umfassend:
- eine Durchführungsvorrichtung (3), umfassend einen Durchgangsabschnitt (11), der konfiguriert ist, um sich durch eine Öffnung in der Wand (5) zu der zweiten Seite (9) der Wand (5) zu erstrecken, und angepasst wird, um die Fluidkommunikation bereitzustellen,
- einen Montagebügel (13), der angepasst ist, um die Durchführungsvorrichtung (3) derart aufzunehmen, dass sich der Durchgangsabschnitt (11) durch eine Öffnung in dem Montagebügel (13) erstreckt, der Montagebügel (13) umfassend mindestens einen Stützbereich (14, 14') umfassend eine Anstoßoberfläche (16, 16'), die konfiguriert ist, um an einer ersten Wandoberfläche (17) der Wand (5) anzustoßen, wobei sich die erste Wandoberfläche (17) auf der ersten Seite (7) der Wand (5) befindet, wenn der Durchgangsabschnitt (11) in der Öffnung in der Wand (5) angeordnet ist,
wobei der mindestens eine Stützbereich (14, 14') angepasst ist, um durch Sicherungsmittel an der ersten Wandoberfläche (17) befestigt zu werden,
- einen Halter (19), der angepasst wird, um an dem Durchgangsabschnitt (11) der Durchführungsvorrichtung (3) von der zweiten Seite (9) der Wand (5) angebracht zu werden, wobei der Halter (19), umfassend eine Berührungsoberfläche (21), angepasst ist, um gegen eine zweite Wandoberfläche (23) zu drücken, die sich auf der zweiten Seite (9) der Wand (5) befindet, wenn der Halter (19) an dem Durchgangsabschnitt (11) angebracht wird, wobei dadurch die Durchführungsanordnung (1) in der Wand (5) mittels Erzeugens einer Klemmkraft zwischen der Anstoßoberfläche (16, 16') und der Berührungsoberfläche (23) fixiert wird, **dadurch gekennzeichnet, dass** sich die Sicherungsmittel in einer Richtung von der zweiten Seite (9) der Wand (5) und durch die Wand (5) in die Anstoßoberfläche (16) hinein erstrecken und dadurch, dass im Wesentlichen die gesamte verfügbare Anstoßoberfläche (16) als eine Anbringungszone für die Sicherungsmittel derart konfiguriert ist, dass die Sicherungsmittel willkürlich innerhalb der Fläche der Anstoßoberfläche (16) positioniert werden können,

5. Durchführungsanordnung (1) nach Anspruch 4, wobei der Montagebügel (13) einen Aufnahmebereich (27, 29), der angepasst ist, um die Durchführungsvorrichtung (3) aufzunehmen und eine Vielzahl von Stützbereichen (14a,.., 14e), die sich um den Umfang des Aufnahmebereichs (27, 29) herum befinden, umfasst, jeder der Vielzahl von Stützbereichen (14a,.., 14e) umfassend einen Anstoßoberflächenabschnitt (16a,.., 16e).

6. Durchführungsanordnung (1) nach Anspruch 5, wobei mindestens einer der Vielzahl von Stützbereichen (14a,.., 14e) wahlweise entfernbar ist.

7. Durchführungsanordnung (1) nach einem der Ansprüche 4 bis 6, wobei die Vielzahl von Stützbereichen (14a,.., 14e) die Anbringungszone für Befestigungsmittel zum Befestigen der Anstoßoberfläche (16) an der erste Wandfläche (17) bereitstellen.

8. Durchführungsanordnung (1) nach einem der Ansprüche 4 bis 7, wobei der Montagebügel (13) und die Durchführungsvorrichtung (3) angepasst sind, um mittels einer Schnappverriegelungsverbindung angebracht zu werden.

9. Durchführungsanordnung (1) nach einem der Ansprüche 4 bis 8, wobei der Halter (19) angepasst ist, um an dem Durchgangsabschnitt (11) mittels einer Gewindeverbindung befestigt zu werden.

10. Durchführungsanordnung (1) nach Anspruch 9, wobei der Halter (19) einen Außengewindebereich (43) umfasst und der Durchgangsabschnitt (11) einen Innengewindebereich (41) umfasst, der angepasst ist, um den Außengewindebereich (43) des Halters (19) aufzunehmen.

## Revendications

1. Procédé permettant de monter un ensemble traversant (1) dans un mur (5), l'ensemble traversant (1) étant conçu pour fournir une communication fluidique à travers le mur (5) dans une direction d'extension à partir d'un premier côté (7) du mur (5) jusqu'à un second côté (9) du mur (5), l'ensemble traversant (1) comprenant :
- un dispositif de traversée (3) comprenant une partie de passage (11) conçue pour s'étendre à travers une ouverture dans le mur (5) jusqu'au second côté (9) du mur (5) et étant conçue pour assurer la communication fluidique,
- un support de montage (13), le support de montage (13) étant conçu pour recevoir le dispositif de traversée (3) de telle sorte que la partie de passage (11) s'étend à travers une ouverture dans le support de montage (13), le support de montage (13) comprenant au moins une section de support (14, 14') comprenant une surface de butée (16, 16') conçue pour venir en butée contre une première surface de mur (17) du mur (5), la première surface de mur (17) étant située sur le premier côté (7) du mur (5),
- un élément de retenue (19) étant conçu pour être fixé à la partie de passage (11) du dispositif de traversée (3) à partir du second côté (9) du mur (5), l'élément de retenue (19) comprenant une surface de contact (21) conçue pour s'appuyer contre une seconde surface de mur (23) située sur le second côté (9) du mur (5) lorsque le dispositif de retenue (19) est fixé à la partie de passage (11),
le procédé comprenant :
- l'agencement (101) de la partie de passage (11) du dispositif de traversée (3) à travers l'ouverture dans le mur (5), de telle sorte que la surface de butée (16, 16') vient en butée contre la première surface de mur (17),
- la fixation (100) du dispositif de traversée (3) au support de montage (13) ;
- la fixation (102) de l'au moins une section de support (14, 14') à la première surface de mur (17) par un moyen de fixation s'étendant dans une direction à partir du second côté (9) du mur (5) et à travers le mur (5) dans la surface de butée, dans lequel sensiblement toute la surface de butée disponible peut être utilisée comme zone de fixation pour le moyen de fixation, le moyen de fixation étant positionné de manière arbitraire dans la zone de la surface de butée,
- la fixation (103) de l'ensemble traversant (1) dans le mur (5) en fixant le dispositif de retenue (19) à la partie de passage (11) sur le second côté (9) du mur (5), de sorte que la surface de contact (21) s'appuie contre la seconde surface de mur (23) du second côté (9) du mur (5), créant ainsi une force de serrage entre la surface de butée (16, 16') de l'au moins une section de support (14, 14') et la surface de contact (21) du dispositif de retenue (19).

2. Procédé selon la revendication 1, dans lequel le premier côté (7) du mur (5) correspond à un côté d'entrée du mur (5) au niveau duquel les conduites d'eau menant au dispositif de traversée (3) s'étendent, et le second côté (9) du mur correspond à un côté de sortie du mur (5), au niveau duquel un robinet, un mélangeur ou un autre type de sortie d'eau doit être raccordé au dispositif de traversée.

3. Procédé selon l'une quelconque des revendications précédentes, dans lequel le procédé comprend le réglage de la longueur de la partie de passage (11) qui s'étend à travers l'ouverture dans le mur (5).

4. Ensemble traversant (1) conçu pour fournir une communication fluidique à travers un mur (5) dans une direction d'extension d'un premier côté (7) du mur (5) à un second côté (9) du mur (5),
l'ensemble traversant (1) comprenant :
- un dispositif de traversée (3) comprenant une partie de passage (11) conçue pour s'étendre à travers une ouverture dans le mur (5) jusqu'au second côté (9) du mur (5) et étant conçue pour assurer la communication fluidique,
- un support de montage (13) conçu pour recevoir le dispositif de traversée (3) de telle sorte que la partie de passage (11) s'étend à travers une ouverture dans le support de montage (13), le support de montage (13) comprenant au moins une section de support (14, 14') comprenant une surface de butée (16, 16') conçue pour venir en butée contre une première surface de mur (17) du mur (5), la première surface de mur (17) étant située sur le premier côté (7) du mur (5), lorsque la partie de passage (11) est disposée dans l'ouverture du mur (5), dans lequel l'au moins une section de support (14, 14') est conçue pour être fixée à la première surface de mur (17) par un moyen de fixation,
- un élément de retenue (19) étant conçu pour être fixé à la partie de passage (11) du dispositif de traversée (3) à partir du second côté (9) du mur (5), l'élément de retenue (19) comprenant une surface de contact (21) conçue pour venir en butée contre une seconde surface de mur (23) située sur le second côté (9) du mur (5) lorsque le dispositif de retenue (19) est fixé à la partie de passage (11), fixant ainsi l'ensemble traversant (1) dans le mur (5) en créant une force de serrage entre la surface de butée (16, 16') et la surface de contact (23), **caractérisé en ce que** les moyens de fixation s'étendent dans une direction à partir du second côté (9) du mur (5) et à travers le mur (5) dans la surface de butée (16), et **en ce que** sensiblement toute la surface de butée disponible (16) est conçue comme une zone de fixation pour le moyen de fixation, de sorte que le moyen de fixation peut être positionné de manière arbitraire dans la zone de la surface de butée (16).

5. Ensemble traversant (1) selon la revendication 4, dans lequel le support de montage (13) comprend une section de réception (27, 29) conçue pour recevoir le dispositif de traversée (3), et une pluralité de sections de support (14a, .., 14e), situées autour de la périphérie de la section de réception (27, 29), chacune de la pluralité de sections de support (14a, .., 14e) comprenant une partie de surface de butée (16a, .., 16e).

6. Ensemble traversant (1) selon la revendication 5, dans lequel au moins l'une de la pluralité de sections de support (14a, .., 14e) est amovible de manière sélective.

7. Ensemble traversant (1) selon l'une quelconque des revendications 4 à 6, dans lequel la pluralité de sections de support (14a, .., 14e) fournissent la zone de fixation destinée à fixer le moyen de fixation de la surface de butée (16) à la première surface de mur (17).

8. Ensemble traversant (1) selon l'une quelconque des revendications 4 à 7, dans lequel le support de montage (13) et le dispositif de traversée (3) sont conçus pour être fixés au moyen d'une liaison par encliquetage.

9. Ensemble traversant (1) selon l'une quelconque des revendications 4 à 8, dans lequel le dispositif de retenue (19) est conçu pour être fixé à la partie de passage (11) au moyen d'un raccord fileté.

10. Ensemble traversant (1) selon la revendication 9, dans lequel le dispositif de retenue (19) comprend une section filetée mâle (43), et la partie de passage (11) comprend une section filetée femelle (41) conçue pour recevoir la section filetée mâle (43) du dispositif de retenue (19).
